(19) Europäisches Patentamt
European Patent Office
Office européen des brevets

(11) EP 4 797 801 A1

(12) EUROPEAN PATENT APPLICATION
published in accordance with Art. 153(4) EPC

(43) Date of publication:
**26.08.2026 Bulletin 2026/35**

(21) Application number: **24878969.5**

(22) Date of filing: **14.10.2024**

(51) International Patent Classification (IPC):
***H04W 48/08*** *(2009.01)*

(52) Cooperative Patent Classification (CPC):
**H04W 48/08; H04W 48/12**

(86) International application number:
**PCT/CN2024/124785**

(87) International publication number:
**WO 2025/082325 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.10.2023 CN 202311364174**

(71) Applicant: **Vivo Mobile Communication Co., Ltd.**
**Dongguan, Guangdong 523863 (CN)**

(72) Inventors:
- **LIN, Zhipeng**
  **Dongguan, Guangdong 523863 (CN)**
- **LIU, Siqi**
  **Dongguan, Guangdong 523863 (CN)**
- **JI, Zichao**
  **Dongguan, Guangdong 523863 (CN)**
- **JIANG, Wei**
  **Dongguan, Guangdong 523863 (CN)**
- **ZHENG, Kaili**
  **Dongguan, Guangdong 523863 (CN)**
- **MO, Yitao**
  **Dongguan, Guangdong 523863 (CN)**
- **ZHANG, Hongping**
  **Dongguan, Guangdong 523863 (CN)**
- **BAO, Wei**
  **Dongguan, Guangdong 523863 (CN)**
- **LI, Yuan**
  **Dongguan, Guangdong 523863 (CN)**
- **PAN, Xueming**
  **Dongguan, Guangdong 523863 (CN)**
- **WU, Kai**
  **Dongguan, Guangdong 523863 (CN)**
- **WANG, Lihui**
  **Dongguan, Guangdong 523863 (CN)**

(74) Representative: **Shieldmark**
**P.O. Box 90471**
**2509 LL The Hague (NL)**

# (54) OPERATION EXECUTION METHOD AND APPARATUS, TERMINAL, NETWORK SIDE DEVICE, AND MEDIUM

(57) The present application relates to the technical field of communications, and discloses an operation execution method and apparatus, a terminal, a network side device, and a medium. The operation execution method of the embodiments of the present application comprises: a terminal receives a PBCH payload sent by a network side device; and on the basis of the PBCH payload, the terminal executes an operation corresponding to the PBCH payload, wherein the PBCH payload at least comprises at least one of the following: frame information related to all SFNs; cell access restriction information; first information, the first information being used for determining the type of a first module corresponding to the PBCH payload, and the first module being used for sending at least one of a synchronization signal and a PBCH; type information of the PBCH payload; and bit information of the PBCH payload.

Network side device
Terminal
501: Send a PBCH payload to the terminal
502: Receive the PBCH payload sent by the network side device
503: Execute a behavior corresponding to the PBCH payload based on the PBCH payload

FIG. 5



Processed by Luminess, 75001 PARIS (FR)

## Description

### CROSS-REFERENCE TO RELATED APPLICATIONS

This application claims priority to Chinese Patent Application No. 202311364174.1, filed in China on October 19, 2023, which is incorporated herein by reference in its entirety.

### TECHNICAL FIELD

This application pertains to the field of communication technologies, and specifically relates to a behavior execution method and apparatus, a terminal, a network side device, and a medium.

### BACKGROUND

Currently, a physical broadcast channel (Physical Broadcast Channel, PBCH) payload (namely, payload) may include master information block (Master Information Block, MIB) information provided by upper layers, and may further include a physical layer payload provided by physical layers.

However, information included in the PBCH payload is usually fixed. When receiving the PBCH payload, a terminal can execute a fixed behavior corresponding to the PBCH payload based only on the fixed information in the PBCH payload. Consequently, flexibility of executing, by the terminal, the behavior corresponding to the PBCH payload is relatively poor.

### SUMMARY

Embodiments of this application provide a behavior execution method and apparatus, a terminal, a network side device, and a medium, to resolve a problem that flexibility of executing, by a terminal, a behavior corresponding to a PBCH payload is relatively poor.

According to a first aspect, a behavior execution method is provided. The method is performed by a terminal, and the method includes: receiving, by the terminal, a PBCH payload sent by a network side device; and executing, by the terminal, a behavior corresponding to the PBCH payload based on the PBCH payload. The PBCH payload includes at least one of the following: frame information related to all system frame numbers (System frame number, SFN); cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

According to a second aspect, a behavior execution method is provided. The behavior execution method is performed by a network side device, and the method includes: sending, by the network side device, a PBCH payload to a terminal. The PBCH payload is used by the terminal to execute a behavior corresponding to the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

According to a third aspect, a behavior execution apparatus is provided. The apparatus includes a receiving module and an execution module. The receiving module is configured to receive a PBCH payload sent by a network side device. The execution module is configured to execute a behavior corresponding to the PBCH payload based on the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

According to a fourth aspect, a behavior execution apparatus is provided. The apparatus includes a sending module. The sending module is configured to send a PBCH payload to a terminal. The PBCH payload is used by the terminal to execute a behavior corresponding to the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

According to a fifth aspect, a terminal is provided. The terminal includes a processor and a memory. The memory stores a program or instructions capable of running on the processor, and the program or the instructions are executed by the processor to implement the steps of the method according to the first aspect.

According to a sixth aspect, a terminal is provided, including a processor and a communication interface. The communication interface is configured to receive a PBCH payload sent by a network side device. The processor is configured to execute a behavior corresponding to the PBCH payload based on the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

According to a seventh aspect, a network side device is provided. The network side device includes a processor and a memory. The memory stores a program or instructions capable of running on the processor, and the program or the instructions are executed by the processor to implement the steps of the method according to the second aspect.

According to an eighth aspect, a network side device is provided, including a processor and a communication interface. The communication interface is configured to send a PBCH payload to a terminal. The PBCH payload is used by the terminal to execute a behavior corresponding to the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

According to a ninth aspect, a readable storage medium is provided. The readable storage medium stores a program or instructions, and the program or the instructions are executed by a processor to implement the steps of the method according to the first aspect or the steps of the method according to the second aspect.

According to a tenth aspect, a wireless communication system is provided, including a terminal and a network side device. The terminal may be configured to perform the steps of the method according to the first aspect, and the network side device may be configured to perform the steps of the method according to the second aspect.

According to an eleventh aspect, a chip is provided. The chip includes a processor and a communication interface. The communication interface is coupled to the processor. The processor is configured to run a program or instructions to implement the method according to the first aspect or the method according to the second aspect.

According to a twelfth aspect, a computer program/program product is provided. The computer program/program product is stored in a storage medium. The program/program product is executed by at least one processor to implement the steps of the method according to the first aspect or implement the steps of the method according to the second aspect.

In embodiments of this application, the terminal may receive a PBCH payload sent by a network side device. The terminal may execute a behavior corresponding to the PBCH payload based on the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload. In this solution, the PBCH payload received by the terminal and sent by the network side device may include at least one of frame information related to all SFNs, cell access restriction information, first information, type information of the PBCH payload, and bit information of the PBCH payload. Therefore, the terminal may execute different corresponding behaviors based on different information included in the PBCH payload, thereby improving flexibility of executing, by the terminal, the behavior corresponding to the PBCH payload.

## BRIEF DESCRIPTION OF DRAWINGS

FIG. 1 is a block diagram of a wireless communication system to which an embodiment of this application is applicable;
FIG. 2 is a schematic diagram of a structure of a synchronization signal block (Synchronization Signal Block, SSB) in a related art;
FIG. 3 is a schematic diagram of a physical random access channel occasion (Physical Random Access Channel Occasion, RO) for mapping an SSB to a frequency division multiplexing (Frequency Division Multiplexing, FDM) in a related art;
FIG. 4 is a schematic diagram of an RO for mapping an SSB to a time division multiplexing (Time Division Multiplexing, TDM)/FDM in a related art;
FIG. 5 is a flowchart of a behavior execution method according to an embodiment of this application;
FIG. 6 is a schematic diagram of a structure of a behavior execution apparatus according to an embodiment of this application;
FIG. 7 is a schematic diagram of a structure of another behavior execution apparatus according to an embodiment of this application;

FIG. 8 is a schematic diagram of a communication device according to an embodiment of this application;

FIG. 9 is a schematic diagram of a hardware structure of a terminal according to an embodiment of this application; and

FIG. 10 is a schematic diagram of a hardware structure of a network side device according to an embodiment of this application.

**DESCRIPTION OF EMBODIMENTS**

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in an order other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as follows: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation ($6^{th}$ Generation, 6G) communication system other than the NR system.

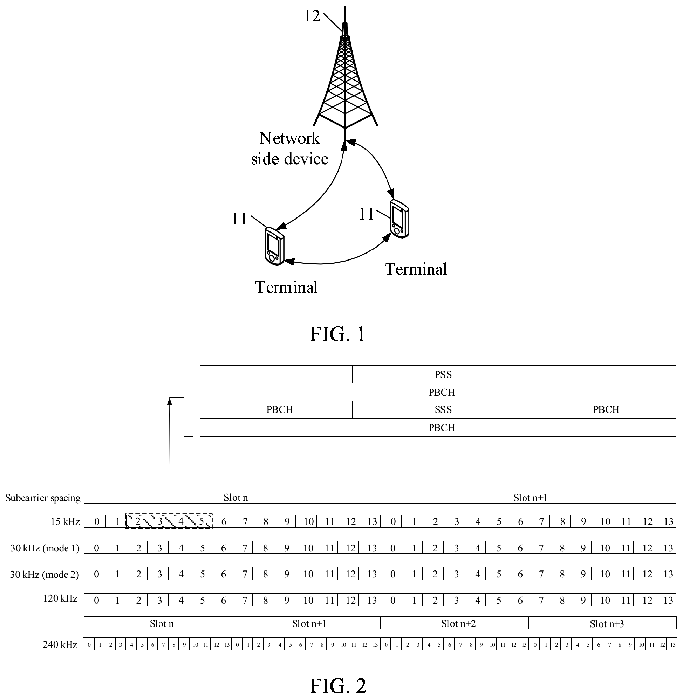

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes: a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, and the like. The base station may be referred to as a NodeB (NodeB, NB), an evolved NodeB (Evolved NodeB, eNB), the next generation NodeB (the next generation NodeB, gNB), a new radio NodeB

(New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that the same technical effects are achieved. It should be noted that in the embodiments of this application, only a base station in an NR system is used as an example for description, and a specific type of the base station is not limited.

With reference to the accompanying drawings, a behavior execution method and apparatus, a terminal, a network side device, and a medium that are provided in the embodiments of this application are described below in detail by using some embodiments and application scenarios thereof.

To enable the terminal to search for a suitable cell and synchronize with a selected cell, a network side device usually needs to broadcast a synchronization signal and provide specific master information about a cell. The synchronization signal mainly includes a primary synchronization signal and a secondary synchronization signal. The master information of the cell may be carried by a PBCH. Master system information carried by the PBCH is also referred to as a master information block. For related content of the master information block, refer to specific descriptions in a related protocol. Usually, as shown in FIG. 2, an SSB may include a synchronization signal and a PBCH.

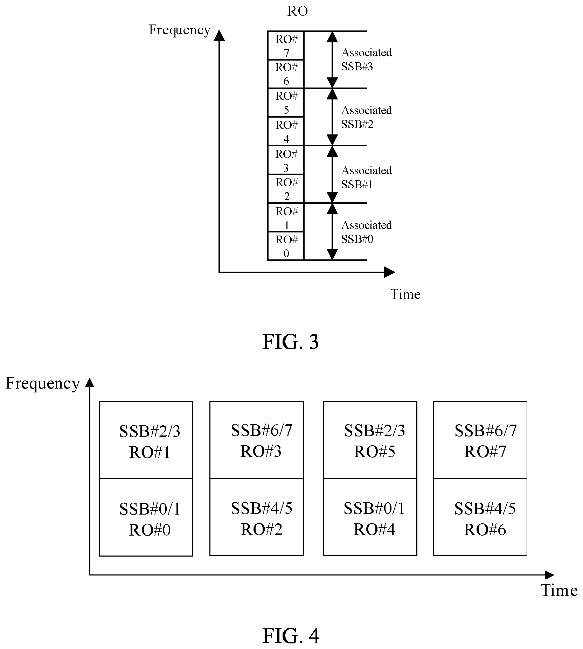

In NR, a cell may configure a plurality of ROs for FDM at a time domain location of a physical random access channel (Physical Random Access Channel, PRACH). At one moment, a quantity of ROs on which FDM may be performed may be: {1, 2, 4, 8}. For example, as shown in FIG. 3, at a moment, eight RO resources are distributed at different frequencies.

A random access preamble (Preamble) can be transmitted only on a time domain resource (namely, an RO resource) configured by using a parameter PRACHConfigurationIndex, the random access preamble can be transmitted only on a frequency domain resource configured by using a parameter prach-FDM, and a PRACH frequency domain resource is $n_{RA} \in \{0, 1, ..., M\text{-}1\}$, where M is equal to a higher-layer parameter prach-FDM. During initial access, the PRACH frequency domain resource $n_{RA}$ is numbered in ascending order starting from an RO resource at a lowest frequency within an initial active uplink bandwidth part (initial active uplink bandwidth part). Otherwise, the PRACH frequency domain resource $n_{RA}$ is numbered in ascending order starting from an RO resource at a lowest frequency within an active uplink bandwidth part (active uplink bandwidth part). For example, as shown in FIG. 3, the RO resources are sequentially numbered RO #0 to RO #7 in ascending order of frequencies.

In NR, there is an association relationship between an RO and an actually sent SSB. One SSB may be associated with a plurality of ROs, or a plurality of SSBs may be associated with one RO (in this case, different SSBs correspond to different preambles). Usually, a base station may send different SSBs through different beams. A corresponding terminal sends a preamble on an RO associated with an SSB. In this way, the terminal selects, based on strength of a received downlink beam/SSB, an RO/"a combination of an RO and a preamble" associated with an SSB with good signal quality, to send msg1 (namely, message 1). In this way, a network may determine, based on an RO of a received preamble/"a combination of an RO and a preamble", the SSB selected by the terminal, and send msg2 (namely, message 2) on a downlink beam corresponding to the SSB, to ensure received quality of a downlink signal.

For example, as shown in FIG. 3, a quantity of ROs for FDM at a moment is 8, and a quantity of actually transmitted SSBs is 4, namely, SSB#0, SSB#1, SSB#2, and SSB#3. Each SSB is associated with two ROs. If the terminal determines to send a PRACH/msg1/Preamble on ROs corresponding to SSB#0, the terminal selects one RO from RO#0 and RO#1 to send the PRACH.

For example, as shown in FIG. 4, a quantity of ROs for FDM at a moment is 2, and a quantity of actually transmitted SSBs is 8, namely, SSB#0, SSB#1, ..., and SSB#7. Every two SSBs are associated with one RO. When a plurality of SSBs share one RO, preamble sets associated with the plurality of SSBs are different. In other words, a same preamble cannot belong to preamble sets associated with different SSBs. RO#0 is used as an example. RO#0 has 60 preambles associated with SSBs. Preambles indexed 0 to 29 are associated with SSB#0, and preambles indexed 30 to 59 are associated with SSB#1.

Before sending the PRACH, the terminal first performs resource selection. The terminal may select, based on RSRP (Reference Signal Received Power, RSRP) of a received beam (namely, beam)/SSB, an SSB whose reference signal received power is greater than a threshold. If there are a plurality of SSBs whose RSRP is greater than the threshold, the terminal may select any SSB whose RSRP is greater than the threshold; or if there is no SSB whose RSRP is greater than the threshold, the terminal selects an SSB based on implementation.

Based on a configuration of a network, the terminal may obtain a correspondence between an SSB and an RO. After an SSB is selected, an RO corresponding to the selected SSB is used as an RO for sending the PRACH/preamble. If the selected SSB is associated with a plurality of ROs, the terminal may select one of the ROs to send the PRACH/-preamble.

For example, as shown in FIG. 3, it is assumed that the terminal selects SSB#1. The terminal may select one of RO#2 and RO#3 to send the PRACH/preamble. As shown in FIG. 4, if the terminal selects SSB#1, the terminal may select,

from ROs (RO#0 or RO#4) associated with SSB#1, an available RO closest to a current time, to send the PRACH/-preamble.

On the selected RO, the terminal selects one preamble from a preamble set associated with the selected SSB, to send the PRACH. For example, as shown in FIG. 4, if an RO is associated with two SSBs, preambles in an available preamble set associated with SSBs on one RO are classified into two subsets, and each subset corresponds to one SSB. The terminal selects a preamble sequence in a preamble subset corresponding to the selected SSB for sending of the PRACH.

Currently, limited by a bandwidth, a size of the PBCH is limited, and many master information needs to be placed in the SIB. A PBCH payload may include only MIB information provided by upper layers, or may include a physical layer payload provided by physical layers.

However, information included in the PBCH payload is usually fixed. When receiving the PBCH payload, the terminal can execute a fixed behavior corresponding to the PBCH payload based only on the fixed information in the PBCH payload. Consequently, flexibility of executing, by the terminal, the behavior corresponding to the PBCH payload is relatively poor.

To resolve the foregoing problem, embodiments of this application provide a behavior execution method and apparatus, a terminal, a network side device, and a medium. In the behavior execution method provided in embodiments of this application, the terminal may receive a PBCH payload sent by a network side device. The terminal may execute a behavior corresponding to the PBCH payload based on the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload. In this solution, the PBCH payload received by the terminal and sent by the network side device may include at least one of frame information related to all SFNs, cell access restriction information, first information, type information of the PBCH payload, and bit information of the PBCH payload. Therefore, the terminal may execute different corresponding behaviors based on different information included in the PBCH payload, thereby improving flexibility of executing, by the terminal, the behavior corresponding to the PBCH payload.

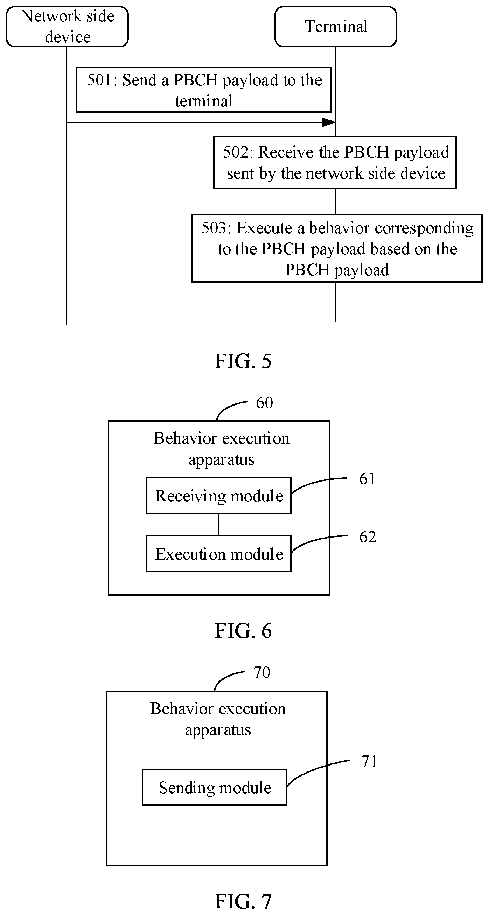

An embodiment of this application provides a behavior execution method. FIG. 5 is a flowchart of a behavior execution method according to an embodiment of this application. As shown in FIG. 5, the behavior execution method provided in this embodiment of this application may include step 501 to step 503.

Step 501: A network side device sends a PBCH payload to a terminal.

Step 502: The terminal receives the PBCH payload sent by the network side device.

The PBCH payload is used by the terminal to execute a behavior corresponding to the PBCH payload, and the PBCH payload includes at least one of 1.1 to 1.5:

1.1. Frame information related to all SFNs
1.2. Cell access restriction information
1.3. First information, where the first information is used to determine a type of a first module corresponding to the PBCH payload, and the first module is configured to send at least one of a synchronization signal and a PBCH
1.4. Type information of the PBCH payload
1.5. Bit information of the PBCH payload

Optionally, in this embodiment of this application, the frame information related to all the SFNs may include at least one of the following: all the SFNs; and all the SFNs and all hyper frame numbers HFNs.

Optionally, in this embodiment of this application, all the SFNs may include a 10-bit SFN.

In this embodiment of this application, because the frame information related to all the SFNs may include all the SFNs, or include all the SFNs and all the hyper frame numbers HFNs, flexibility of information included the PBCH payload can be improved, thereby improving flexibility of executing, by the terminal, a corresponding behavior based on the PBCH payload.

Optionally, in this embodiment of this application, a quantity of bits of all the SFNs may be greater than or equal to a first quantity of bits.

In this embodiment of this application, the quantity of bits of all the SFNs may be greater than or equal to the first quantity of bits, that is, a range of the SFNs is increased, to adapt to a relatively large discontinuous reception (Discontinuous Reception, DRX) cycle.

Optionally, in this embodiment of this application, the first quantity of bits may be any possible quantity of bits such as 20 bits or 30 bits.

For example, if the quantity of bits of all the SFNs is 20 bits, a 5G eDRX cycle of more than 2 hours may be covered.

In this embodiment of this application, because the quantity of bits of all the SFNs may be greater than or equal to

the first quantity of bits, all the SFNs may adapt to a relatively large DRX cycle, thereby improving an application range of the frame information related to all the SFNs.

Optionally, in this embodiment of this application, when the PBCH payload does not include the frame information related to all the SFNs, the frame information related to all the SFNs may be carried in a demodulation reference signal (Demodulation Reference Signal, DMRS) of the PBCH, thereby improving robustness of the PBCH.

Optionally, in this embodiment of this application, the cell access restriction information is used to restrict access for different types of terminals. The cell access restriction information may be determined based on at least one of 2.1 to 2.13:

2.1. Different terminal types

For example, different cell barred (namely, cell barred) information may be separately configured for a terminal with a reduced capability (Reduced Capability, RedCap) and a terminal with a normal capability. Details are shown in Table 1:

**Table 1**

| | | |
|---|---|---|
| cellBarredNormalUE | ENUMERATED | {barred, notBarred}; and |
| cellBarredRedCap | ENUMERATED | {barred, notBarred}. |

For another example, a bitmap (namely, bitmap) may be introduced to configure whether to allow a specific terminal type to access a cell. If a bit in the bitmap is set to 1, it indicates that access by a corresponding terminal type is not allowed. Details are shown in Table 2:

**Table 2**

| | |
|---|---|
| cellBarredBitmap | BIT STRING (SIZE (8)) |

A correspondence between a bitmap and a terminal type may be specified in a protocol, for example, as shown in Table 3:

**Table 3**

| Bit 0 | Bit 1 | Bit 2 | Bit 3 | Bit 4 | Bit 5 | Bit 6 | Bit 7 |
|---|---|---|---|---|---|---|---|
| RedCap UE | Handheld UE | CPE | Reserved | Reserved | Reserved | Reserved | Reserved |

For another example, joint coding may be used, and a 2-bit indication may indicate four states:

a. {Normal barred, RedCap barred}: Access by Normal UE and access by RedCap UE are not allowed.
b. {Normal notbarred, RedCap barred}: Access by Normal UE access is allowed, and access by RedCap UE access is not allowed.
c. {Normal barred, RedCap notbarred}: Access by Normal UE access is not allowed, and access by RedCap UE access is allowed.
d. {Normal notbarred, RedCap notbarred}: Access by Normal UE access is allowed, and access by RedCap UE access is allowed.

2.2. Different cell services

2.3. Different network slices

For example, different cell barred information is separately configured for an internet of things (Internet of Things, IoT) network slice and an enhanced mobile broadband (Enhanced Mobile Broadband, eMBB) network slice. The IoT network slice and the eMBB network slice herein may correspond to different random access resources. Configured cell

barred information is shown in Table 4.

**Table 4**

| | | |
|---|---|---|
| cellBarredIoT | ENUMERATED | {barred, notBarred}; and |
| cellBarredEMBB | ENUMERATED | {barred, notBarred}. |

2.4. Specific PRACH resource set

2.5. Specific feature combination (namely, feature combination)

2.6. Different cell frequency domain resources

Optionally, in this embodiment of this application, the cell frequency domain resource may include any one of the following: a band, a frequency domain range, and a band combination.

2.7. Different cell time domain resources

Optionally, in this embodiment of this application, the cell time domain resource may include any one of the following: a time domain location and a time domain range.

2.8. Different terminal access priorities

2.9. Measurement result of the terminal for a downlink signal

Optionally, in this embodiment of this application, the measurement result may include at least one of the following: RSRP, reference signal received quality (Reference Signal Received Quality, RSRQ), and received signal strength indication (Received Signal Strength Indication, RSSI).

2.10. Whether the terminal supports network energy saving

For example, the barred information is introduced in a cell to indicate whether to allow access by a terminal that does not support network energy saving. In this case, in a case that a value of the barred information is 1, it is equivalent to that the cell allows only access of a terminal that supports network energy saving.

2.11. Minimum bandwidth supported by the terminal

For example, the barred information is introduced in a cell to indicate whether to allow only access by a terminal whose minimum bandwidth is less than 20 MHz. In this case, in a case that a value of the barred information is 1, a minimum bandwidth of a BWP of the cell is equivalent to 20 MHz.

2.12. Maximum bandwidth supported by the terminal

2.13. Duplex mode supported by the terminal

Optionally, in this embodiment of this application, a barred indication may be independently introduced for a half-duplex terminal and a full-duplex terminal.

For example, it indicates that a terminal that does not support full-duplex is barred, that is, does not perform access, to avoid interfering downlink (Downlink, DL) receiving by an uplink (Uplink, UL).

In this embodiment of this application, when the cell access restriction information is used to restrict access for different types of terminals, the cell access restriction information may be determined based on at least one of 2.1 to 2.13, thereby improving flexibility of determining the cell access restriction information.

Optionally, in this embodiment of this application, the cell access restriction information is used to restrict access only for a specific object, the PBCH payload is a PBCH payload in the first module, and the first module is configured to send at least one of a synchronization signal and a PBCH.

The specific object may include any one of the following: a specific beam, a specific signal, and a specific first module.

In this embodiment of this application, the cell access restriction information may satisfy at least one of 3.1 to 3.3:

3.1. Cell access restriction information in different first modules is different.
3.2. Cell access restriction information in different types of first modules is different in a case that a same cell supports the different types of first modules.
3.3. The cell access restriction information is cell access restriction information in a specific type of first module.

Optionally, in this embodiment of this application, the first module may be an SSB.

Optionally, in this embodiment of this application, when the cell access restriction information satisfies that the cell access restriction information in different first modules is different, the terminal may attempt to access the cell as long as the terminal selects a first module that meets an SS-RSRP requirement during initial access, and cell access restriction information in the first module displays that access is allowed.

Optionally, in this embodiment of this application, when the cell access restriction information satisfies that the cell access restriction information in different first modules is different, the terminal may attempt to access the cell only when cell access restriction information, in all first modules that meet an SS-RSRP requirement, that is obtained through measurement by the terminal in an initial access phase displays that access is allowed.

For example, if the cell access restriction information satisfies that the cell access restriction information in different types of first modules is different in the case that a same cell supports the different types of first modules, when a cell supports two bands (namely, bands), one first module is configured on each band, and cell access restriction information carried in such two first modules may be configured to be different. In this way, the terminal may access through a band corresponding to a first module that allows access.

In this embodiment of this application, when the cell access restriction information is used to restrict access only for a specific object, the cell access restriction information may satisfy at least one of 3.1 to 3.3, thereby improving flexibility of restricting access for the specific object by the cell access restriction information.

Optionally, in this embodiment of this application, the cell access restriction information is used to restrict selection for an intra-frequency cell or an inter-frequency cell. The cell access restriction information may be used to indicate either of 4.1 and 4.2:

4.1. The terminal shall not reselect another cell in a first frequency group the same as a frequency group in which an access barred cell is located, and excludes a cell in the first frequency group as a candidate cell for cell selection or reselection in first duration.

Optionally, in this embodiment of this application, the first duration may be any possible duration such as 300 seconds or 350 seconds.

Optionally, in this embodiment of this application, the first frequency group may be configured or predetermined by a network.

4.2. The terminal shall not reselect another cell in a small cell group associated with a first cell, and excludes a cell in the small cell group as a candidate cell for cell selection or reselection in second duration, and the first cell is a macro cell associated with an access barred cell.

Optionally, in this embodiment of this application, the second duration and the first duration may be the same or different.

Optionally, in this embodiment of this application, the second duration may be any possible duration such as 300 seconds or 400 seconds.

Optionally, in this embodiment of this application, the macro cell, the small cell group, and an association relationship between the macro cell and the small cell group may be predetermined by a network or configured by a network.

In this embodiment of this application, when the cell access restriction information is used to restrict selection for the intra-frequency cell or the inter-frequency cell, the cell access restriction information may be used to indicate either of 4.1 and 4.2, thereby improving flexibility of restricting selection for the intra-frequency cell or the inter-frequency cell, to adapt to a cell group or a super cell.

Optionally, in this embodiment of this application, the first information may be an MIB including type information of the first module.

Optionally, in this embodiment of this application, the MIB may include at least one of the following:

an IoT MIB;
a multimedia broadcast multicast service (Multimedia Broadcast Multicast Service, MBMS) MIB;
a normal (namely, normal) MIB;
a sidelink (namely, sidelink) MIB;

a non-terrestrial network (Non-Terrestrial Network, NTN) MIB, where it may be considered that content of the MIB supports variable interpretation, for example, one start bit indicates whether a network is a TN or an NTN, and a subsequent bit field indicates different interpretation based on whether the network is the TN or the NTN network;
a measurement MIB;
a non-anchor (namely, non-anchor) MIB; and
an MIB without an SFN.

In this embodiment of this application, the first information may be an MIB including the type information of the first module. Therefore, the type of the first module may be indicated by using information included in the MIB. In this way, the type of the first module may be conveniently indicated.

Optionally, in this embodiment of this application, a field of the MIB may be parsed by the terminal based on a first rule. The first rule includes any one of the following:

when information in the MIB is used for a plurality of types of parsing, the terminal detects first modules having same or different type information for N consecutive times, and a first module detected at an Nth time has inconsistent parsing of a first field in the MIB, the terminal ignores parsing of the first field by the first module detected at the Nth time; and
when the terminal detects that all the first modules having same or different type information for N consecutive times indicate first content, the terminal ignores the first content.

N is an integer greater than or equal to 2, and the first content includes any one of the following: information that cannot be used for access, information restricting access, access information being not carried, or another access location.

In this embodiment of this application, because the field of the MIB may be parsed by the terminal based on the first rule, some pseudo base stations may be prevented from sending unexpected content of the first module.

Optionally, in this embodiment of this application, there may be at least two pieces of type information of the first module. A quasi co-location (Quasi-Colocation, QCL) relationship between any two first modules may be determined based on any one of the following:

A. first modules having same second content are quasi-co-located in terms of a first parameter; and
B. whether first modules having different second content are quasi-co-located in terms of a first parameter is configured or predetermined by a network.

The second content includes at least one of the following: a first module index, a first module format, a first module type, a PBCH demodulation reference signal index, and a slot index, and the first parameter includes at least one of the following: Doppler spread, Doppler frequency shift, an average gain, an average delay, delay spread, and a spatial reception parameter.

Optionally, in this embodiment of this application, whether first modules between different first module formats/first module types are quasi-co-located in terms of the first parameter may be configured by a network or predetermined by a network.

For example, a mapping relationship between different types of first modules may be introduced, and associated first modules are considered to be quasi-co-located in terms of the first parameter.

In this embodiment of this application, when a number of pieces of type information of the first module is at least two, a QCL relationship between any two first modules may be determined based on A or B, thereby improving flexibility of determining the QCL relationship between any two first modules.

Optionally, in this embodiment of this application, the first module supports different cyclic prefix types.

The cyclic prefix type supported by the first module is determined based on any one of the following: a band on which the first module is transmitted; and blind detection of the terminal.

In this embodiment of this application, the first module may support different cyclic prefix types, and the cyclic prefix type supported by the first module may be determined based on the band on which the first module is transmitted or blind detection of the terminal, thereby improving flexibility of determining the cyclic prefix type supported by the first module.

Optionally, in this embodiment of this application, the type information of the PBCH payload may include any one of the following: common information of a plurality of first module types; and different information of the plurality of first module types.

The first module is configured to send at least one of a synchronization signal or a PBCH.

In this embodiment of this application, the type information of the PBCH payload may include the common information of the plurality of first module types or the different information of the plurality of first module types. Therefore, flexibility of information included in the PBCH payload may be further improved, thereby improving flexibility of executing,

by the terminal, a corresponding behavior based on the PBCH payload.

Optionally, in this embodiment of this application, the common information of the plurality of first module types is determined at a specific location of the PBCH payload.

Optionally, in this embodiment of this application, the specific location may be a start location or an end location.

Optionally, in this embodiment of this application, the bit information of the PBCH payload is determined based on a display indication in the PBCH payload, or may be predetermined.

For example, the bit information of the PBCH payload is predetermined, and the bit information of the PBCH payload may be indirectly associated with at least one of a synchronization grid, a frequency range, or a band.

In this embodiment of this application, the bit information of the PBCH payload may be determined based on the display indication in the PBCH payload, or may be predetermined, thereby improving flexibility of determining the bit information of the PBCH payload.

Optionally, in this embodiment of this application, different types of PBCH payloads have different quantities of valid bits; and the PBCH payload may include a first bit, and the first bit includes at least one of a padding bit and a reserved bit.

The first bit is used for at least one of the following: making the different types of PBCH payloads have a same size; and bit alignment.

Optionally, in this embodiment of this application, the first bit may be introduced into each PBCH payload.

For example, the padding bit is introduced at an end of a PBCH payload.

Optionally, in this embodiment of this application, the reserved bits may be introduced into each PBCH field.

For example, different MIB types have all fields. Some fields can be completely reserved (namely, reserved) in a case that an MIB/PBCH is not used. A size of each field (including a reserved bit) is a largest field size of a plurality of observed MIB/PBCH types.

In this embodiment of this application, because the PBCH payload may include the first bit, the first bit may enable the PBCH payload to have a same size as another type of PBCH payload, to use first module time domain resources of a same size.

Optionally, in this embodiment of this application, the PBCH payload may further include at least one of 5.1 to 5.16:

5.1 RAN-related information

Optionally, in this embodiment of this application, the RAN-related information may include at least one of the following: RAN type information, RAN tracking area information, and RAN tracking area update indication information.

For example, the RAN type information may include open RAN type information or normal RAN type information.

For another example, the RAN type information may include NTN type information or TN type information.

Optionally, in this embodiment of this application, when an NTN band and a TN band may overlap, the TN/NTN needs to be distinguished before access, to optimize different networks. For example, for the NTN network, a polarization direction may be indicated.

Optionally, in this embodiment of this application, after decoding the first module, the terminal may learn, based on the RAN tracking area information, whether the terminal enters a new RAN tracking area. If the terminal enters the new RAN tracking area, the terminal needs to read the SIB or access a network to update a configuration. If the terminal does not enter a new RAN tracking area, the terminal may continue to maintain a previous configuration.

5.2. Antenna polarization type information

For example, the antenna polarization type information may indicate that a network antenna is of a circular polarization type, a linear polarization type, or the like.

5.3. Antenna polarization direction information

For example, when the network antenna is of the circular polarization type, the antenna polarization direction information may indicate left-hand polarization or right-hand polarization.

5.4. Satellite information in an NTN

Optionally, in this embodiment of this application, the satellite information includes but is not limited to ephemeris information, satellite orbital height information, and a satellite identifier.

For example, when the terminal performs intra-cell service link switching (namely, intra-cell service link switching), a satellite identifier corresponding to an SSB needs to be read, to select different satellites for service link switching. In

this way, corresponding satellite ephemeris information (the ephemeris information is relatively large and may be placed in a common SIB or different SIBs) is determined as input for time calculation and frequency compensation.

5.5. NTN payload mode information

Optionally, in this embodiment of this application, the NTN payload mode information may indicate a regeneration payload (namely, regeneration payload, where in this case, a base station is on a satellite) or a transparent payload (namely, transparent payload, where in this case, a base station is not on a satellite).

5.6. Transmission resource information in a cell

Optionally, in this embodiment of this application, the transmission resource information may include at least one of the following: band information, BWP information, and carrier information.

For example, in a case that a single cell has a plurality of bands, an SSB on a band carries information about another band.

5.7. First indication information, where the first indication information is used to indicate whether a BWP is a separate initial BWP

For example, for a RedCap terminal, whether to use a detected SSB may be determined based on whether a received BWP is a separate initial BWP.

5.8. Second indication information, where the second indication information is used to indicate a control channel resource type

For example, the second indication information may indicate whether CORESET0 is a CORESET0 on a separate initial DL BWP, and is used for a specific service, for example, a RedCap terminal or an IoT terminal.

5.9. Reference signal information associated with the PBCH payload

For example, the reference signal information associated with the PBCH payload may be association information between an SSB corresponding to the MIB and a channel sounding reference signal (Sounding Reference Signal, SRS), or association information between an SSB corresponding to the MIB and a channel state information-reference signal (Channel State Information-Reference Signal, CSI-RS).

5.10. System message associated with the PBCH payload

Optionally, in this embodiment of this application, the system message may be at least one SIB 1.

Optionally, in this embodiment of this application, the system message may be another MIB.

5.11. Third indication information, where the third indication information is used to indicate a duplex mode

Optionally, in this embodiment of this application, the duplex mode may include FDD, TDD, or cross-division duplex (namely, XDD).

Optionally, in this embodiment of this application, when the PBCH payload includes the third indication information, after the duplex mode is indicated in the MIB, SIB information may be allowed to be configured on a downlink subband of the link.

5.12. Cyclic prefix type information

For example, the cyclic prefix type information may indicate an extended CP (namely, extended cyclic prefix) type, a normal CP (namely, normal cyclic prefix) type, a short CP (namely, short-term cyclic prefix) type, or the like.

Optionally, in this embodiment of this application, when the PBCH payload includes the cyclic prefix type information, the SIB1 may support different cyclic prefix types.

5.13. Fourth indication information, where the fourth indication information is used to indicate a cycle or a cycle type of the first module.

Optionally, in this embodiment of this application, the cycle type may include a long cycle type, a medium cycle type, or a short cycle type.

It should be noted that in NR, a current default SSB cycle is 20 ms. If the network selects an ultra-long cycle type (for example, 160/320 ms, which is for energy saving), if the terminal has a problem on an assumption of 20 ms, the fourth indication information may indicate a specific cycle or indicate at least whether the long cycle type is used.

5.14. jump information, where the jump information is used to indicate a first object to jump to, and the first object includes any one of the following: a cell, the first module, a time domain in which the first module is located, or a frequency domain resource on which the first module is located

For example, in the measurement SSB/non-anchor SSB, the jump information indicates cell information of a jump.

For another example, in an SSB/non-anchor SSB at a frequency, the jump information indicates an SSB on another frequency.

5.15. Cell size information

Optionally, in this embodiment of this application, the cell size information may indicate whether a cell is a macro cell in a case of cell free or a normal small cell.

5.16. Length information of an MIB in the PBCH payload

The first module is configured to send at least one of a synchronization signal or a PBCH.

In this embodiment of this application, the PBCH payload may further include at least one of 5.1 to 5.16. Therefore, the terminal may perform more different corresponding behaviors based on more different information included in the PBCH payload. In this way, flexibility of executing, by the terminal, the behavior corresponding to the PBCH payload can be further improved.

Step 503: The terminal executes the behavior corresponding to the PBCH payload based on the PBCH payload.

Optionally, in this embodiment of this application, the terminal may execute, based on any information included in the PBCH payload, a behavior corresponding to the any information.

For example, the terminal may determine downlink time information based on the frame information related to all the system frame numbers SFNs; or determine a cell access control method based on the cell access restriction information; or obtain the type of the first module, and the like based on the first information.

In the behavior execution method provided in this embodiment of this application, the PBCH payload received by the terminal and sent by the network side device may include at least one of frame information related to all SFNs, cell access restriction information, first information, type information of the PBCH payload, and bit information of the PBCH payload. Therefore, the terminal may execute different corresponding behaviors based on different information included in the PBCH payload, thereby improving flexibility of executing, by the terminal, the behavior corresponding to the PBCH payload.

It should be noted that the PBCH payload (namely, PBCH payload) in the behavior execution method provided in this embodiment of this application may include MIB information provided by upper layers, and may further include a physical layer payload provided by physical layers. The MIB may sometimes be replaced by the PBCH payload. In other words, the foregoing information may be in the MIB or may be in the physical layer payload of the PBCH. The MIB type, a first mode type (for example, an SSB type), and the PBCH type may also be interchanged. The first mode may also be expressed as any other module that sends at least one of a synchronization signal and a PBCH. For example, the first mode may also be referred to as a 6G-SSB, and may be specifically determined according to an actual use requirement. This is not limited in this embodiment of this application.

The behavior execution method provided in this embodiment of this application may be performed by a behavior execution apparatus. In the embodiments of this application, an example in which the behavior execution apparatus performs the behavior execution method is used to describe the behavior execution apparatus provided in the embodiments of this application.

With reference to FIG. 6, an embodiment of this application provides a behavior execution apparatus 60. The behavior execution apparatus 60 may include a receiving module 61 and an execution module 62.

The receiving module 61 may be configured to receive a PBCH payload sent by a network side device. The execution module 62 may be configured to execute a behavior corresponding to the PBCH payload based on the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

In a possible implementation, the PBCH payload may further include at least one of the following: RAN-related information; antenna polarization type information; antenna polarization direction information; satellite information in an NTN; NTN payload mode information; transmission resource information in a cell; first indication information, where the first indication information is used to indicate whether a BWP is a separate initial BWP; second indication information, where the second indication information is used to indicate a control channel resource type; reference signal information associated with the PBCH payload; a system message associated with the PBCH payload; third indication information, where the third indication information is used to indicate a duplex mode; cyclic prefix type information; fourth indication information, where the fourth indication information is used to indicate a cycle or a cycle type of the first module; jump information, where the jump information is used to indicate a first object to jump to, and the first object includes any one of the following: a cell, the first module, a time domain in which the first module is located, or a frequency domain resource on

which the first module is located; cell size information; and length information of an MIB in the PBCH payload. The first module is configured to send at least one of a synchronization signal or a PBCH.

In a possible implementation, the RAN-related information may include at least one of the following: RAN type information, RAN tracking area information, and RAN tracking area update indication information.

In a possible implementation, the transmission resource information may include at least one of the following: band information, BWP information, and carrier information.

In a possible implementation, the frame information related to all the SFNs may include at least one of the following: all the SFNs; and all the SFNs and all hyper frame numbers HFNs.

In a possible implementation, a quantity of bits of all the SFNs may be greater than or equal to a first quantity of bits.

In a possible implementation, the cell access restriction information is used to restrict access for different types of terminals. The cell access restriction information may be determined based on at least one of the following: different terminal types; different cell services; different network slices; a specific PRACH resource set; a specific feature combination; different cell frequency domain resources; different cell time domain resources; different terminal access priorities; a measurement result of the terminal for a downlink signal; whether the terminal supports network energy saving; a minimum bandwidth supported by the terminal; a maximum bandwidth supported by the terminal; and a duplex mode supported by the terminal.

In a possible implementation, the cell frequency domain resource may include any one of the following: a band, a frequency domain range, and a band combination.

In a possible implementation, the cell time domain resource may include any one of the following: a time domain location and a time domain range.

In a possible implementation, the cell access restriction information is used to restrict access only for a specific object, the PBCH payload is a PBCH payload in the first module, and the first module is configured to send at least one of a synchronization signal and a PBCH. The specific object may include any one of the following: a specific beam, a specific signal, and a specific first module. The cell access restriction information may satisfy at least one of the following: cell access restriction information in different first modules is different; cell access restriction information in different types of first modules is different in a case that a same cell supports the different types of first modules; and the cell access restriction information is cell access restriction information in a specific type of first module.

In a possible implementation, the cell access restriction information is used to restrict selection for an intra-frequency cell or an inter-frequency cell. The cell access restriction information may be used to indicate any one of the following: the terminal shall not reselect another cell in a first frequency group the same as a frequency group in which an access barred cell is located, and excludes a cell in the first frequency group as a candidate cell for cell selection or reselection in first duration; and the terminal shall not reselect another cell in a small cell group associated with a first cell, and excludes a cell in the small cell group as a candidate cell for cell selection or reselection in second duration, and the first cell is a macro cell associated with an access barred cell.

In a possible implementation, the first information may be an MIB including type information of the first module.

In a possible implementation, a field of the MIB may be parsed by the terminal based on a first rule; and the first rule includes any one of the following: when information in the MIB is used for a plurality of types of parsing, the terminal detects first modules having same or different type information for N consecutive times, and a first module detected at an Nth time has inconsistent parsing of a first field in the MIB, the terminal ignores parsing of the first field by the first module detected at the Nth time; and when the terminal detects that all the first modules having same or different type information for N consecutive times indicate first content, the terminal ignores the first content. N is an integer greater than or equal to 2, and the first content includes any one of the following: information that cannot be used for access, information restricting access, access information being not carried, or another access location.

In a possible implementation, there may be at least two pieces of type information of the first module. A quasi co-location QCL relationship between any two first modules may be determined based on any one of the following: first modules having same second content are quasi-co-located in terms of a first parameter; and whether first modules having different second content are quasi-co-located in terms of a first parameter is configured or predetermined by a network. The second content includes at least one of the following: a first module index, a first module format, a first module type, a PBCH demodulation reference signal index, and a slot index, and the first parameter includes at least one of the following: Doppler spread, Doppler frequency shift, an average gain, an average delay, delay spread, and a spatial reception parameter.

In a possible implementation, the type information of the PBCH payload may include any one of the following: common information of a plurality of first module types; and different information of the plurality of first module types. The first module is configured to send at least one of a synchronization signal or a PBCH.

In a possible implementation, the common information of the plurality of first module types is determined at a specific location of the PBCH payload.

In a possible implementation, the bit information of the PBCH payload may be determined based on a display

indication in the PBCH payload, or may be predetermined.

In a possible implementation, different types of PBCH payloads have different quantities of valid bits; and the PBCH payload may include a first bit, and the first bit includes at least one of a padding bit and a reserved bit. The first bit is used for at least one of the following: making the different types of PBCH payloads have a same size; and bit alignment.

In a possible implementation, the first module supports different cyclic prefix types; and the cyclic prefix type supported by the first module is determined based on any one of the following: a band on which the first module is transmitted; and blind detection of the terminal.

In the behavior execution apparatus provided in this embodiment of this application, the PBCH payload received by the behavior execution apparatus and sent by the network side device may include at least one of frame information related to all SFNs, cell access restriction information, first information, type information of the PBCH payload, and bit information of the PBCH payload. Therefore, different corresponding behaviors may be executed based on different information included in the PBCH payload, thereby improving flexibility of executing the behavior corresponding to the PBCH payload.

The behavior execution apparatus in this embodiment of this application may be an electronic device, for example, an electronic device with an operating system, or may be a component in an electronic device, for example, an integrated circuit or a chip. The electronic device may be a terminal. For example, the terminal may include but is not limited to the foregoing enumerated types of the terminal 11. This is not specifically limited in this embodiment of this application.

The behavior execution apparatus provided in this embodiment of this application can implement the processes implemented in the foregoing terminal side method embodiment, and same technical effects can be achieved. To avoid repetition, details are not described herein again.

With reference to FIG. 7, an embodiment of this application provides another behavior execution apparatus 70. The behavior execution apparatus 70 may include a sending module 71.

The sending module 71 may be configured to send a PBCH payload to a terminal. The PBCH payload is used by the terminal to execute a behavior corresponding to the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

In a possible implementation, the PBCH payload may further include at least one of the following: RAN-related information; antenna polarization type information; antenna polarization direction information; satellite information in an NTN; NTN payload mode information; transmission resource information in a cell; first indication information, where the first indication information is used to indicate whether a BWP is a separate initial BWP; second indication information, where the second indication information is used to indicate a control channel resource type; reference signal information associated with the PBCH payload; a system message associated with the PBCH payload; third indication information, where the third indication information is used to indicate a duplex mode; cyclic prefix type information; fourth indication information, where the fourth indication information is used to indicate a cycle or a cycle type of the first module; jump information, where the jump information is used to indicate a first object to jump to, and the first object includes any one of the following: a cell, the first module, a time domain in which the first module is located, or a frequency domain resource on which the first module is located; cell size information; and length information of an MIB in the PBCH payload. The first module is configured to send at least one of a synchronization signal or a PBCH.

In a possible implementation, the RAN-related information may include at least one of the following: RAN type information, RAN tracking area information, and RAN tracking area update indication information.

In a possible implementation, the transmission resource information may include at least one of the following: band information, BWP information, and carrier information.

In a possible implementation, the frame information related to all the SFNs may include at least one of the following: all the SFNs; and all the SFNs and all hyper frame numbers HFNs.

In a possible implementation, a quantity of bits of all the SFNs may be greater than or equal to a first quantity of bits.

In a possible implementation, the cell access restriction information is used to restrict access for different types of terminals. The cell access restriction information may be determined based on at least one of the following: different terminal types; different cell services; different network slices; a specific PRACH resource set; a specific feature combination; different cell frequency domain resources; different cell time domain resources; different terminal access priorities; a measurement result of the terminal for a downlink signal; whether the terminal supports network energy saving; a minimum bandwidth supported by the terminal; a maximum bandwidth supported by the terminal; and a duplex mode supported by the terminal.

In a possible implementation, the cell frequency domain resource may include any one of the following: a band, a frequency domain range, and a band combination.

In a possible implementation, the cell time domain resource may include any one of the following: a time domain

location and a time domain range.

In a possible implementation, the cell access restriction information is used to restrict access only for a specific object, the PBCH payload is a PBCH payload in the first module, and the first module is configured to send at least one of a synchronization signal and a PBCH. The specific object may include any one of the following: a specific beam, a specific signal, and a specific first module. The cell access restriction information may satisfy at least one of the following: cell access restriction information in different first modules is different; cell access restriction information in different types of first modules is different in a case that a same cell supports the different types of first modules; and the cell access restriction information is cell access restriction information in a specific type of first module.

In a possible implementation, the cell access restriction information is used to restrict selection for an intra-frequency cell or an inter-frequency cell. The cell access restriction information may be used to indicate any one of the following: the terminal shall not reselect another cell in a first frequency group the same as a frequency group in which an access barred cell is located, and excludes a cell in the first frequency group as a candidate cell for cell selection or reselection in first duration; and the terminal shall not reselect another cell in a small cell group associated with a first cell, and excludes a cell in the small cell group as a candidate cell for cell selection or reselection in second duration, and the first cell is a macro cell associated with an access barred cell.

In a possible implementation, the first information may be an MIB including type information of the first module.

In a possible implementation, a field of the MIB may be parsed by the terminal based on a first rule; and the first rule includes any one of the following: when information in the MIB is used for a plurality of types of parsing, the terminal detects first modules having same or different type information for N consecutive times, and a first module detected at an Nth time has inconsistent parsing of a first field in the MIB, the terminal ignores parsing of the first field by the first module detected at the Nth time; and when the terminal detects that all the first modules having same or different type information for N consecutive times indicate first content, the terminal ignores the first content. N is an integer greater than or equal to 2, and the first content includes any one of the following: information that cannot be used for access, information restricting access, access information being not carried, or another access location.

In a possible implementation, there may be at least two pieces of type information of the first module. A quasi co-location QCL relationship between any two first modules may be determined based on any one of the following: first modules having same second content are quasi-co-located in terms of a first parameter; and whether first modules having different second content are quasi-co-located in terms of a first parameter is configured or predetermined by a network. The second content includes at least one of the following: a first module index, a first module format, a first module type, a PBCH demodulation reference signal index, and a slot index, and the first parameter includes at least one of the following: Doppler spread, Doppler frequency shift, an average gain, an average delay, delay spread, and a spatial reception parameter.

In a possible implementation, the type information of the PBCH payload may include any one of the following: common information of a plurality of first module types; and different information of the plurality of first module types. The first module is configured to send at least one of a synchronization signal or a PBCH.

In a possible implementation, the common information of the plurality of first module types is determined at a specific location of the PBCH payload.

In a possible implementation, the bit information of the PBCH payload may be determined based on a display indication in the PBCH payload, or may be predetermined.

In a possible implementation, different types of PBCH payloads have different quantities of valid bits; and the PBCH payload may include a first bit, and the first bit includes at least one of a padding bit and a reserved bit. The first bit is used for at least one of the following: making the different types of PBCH payloads have a same size; and bit alignment.

In a possible implementation, the first module supports different cyclic prefix types; and the cyclic prefix type supported by the first module is determined based on any one of the following: a band on which the first module is transmitted; and blind detection of the terminal.

In the behavior execution apparatus provided in this embodiment of this application, the behavior execution apparatus may send, to the terminal, the PBCH payload including at least one of frame information related to all SFNs, cell access restriction information, first information, type information of the PBCH payload, and bit information of the PBCH payload, so that the terminal executes the behavior corresponding to the PBCH payload. Therefore, the terminal executes different corresponding behaviors based on different information included in the PBCH payload, thereby improving flexibility of executing, by the terminal, the behavior corresponding to the PBCH payload.

The behavior execution apparatus in this embodiment of this application may be an electronic device, for example, an electronic device with an operating system, or may be a component in an electronic device, for example, an integrated circuit or a chip. The electronic device may be another device other than the terminal. For example, the another device may be a server, a network attached storage (Network Attached Storage, NAS), or the like. This is not specifically limited in this embodiment of this application.

The behavior execution apparatus provided in this embodiment of this application can implement the processes implemented in the foregoing network side device method embodiment, and same technical effects can be achieved. To

avoid repetition, details are not described herein again.

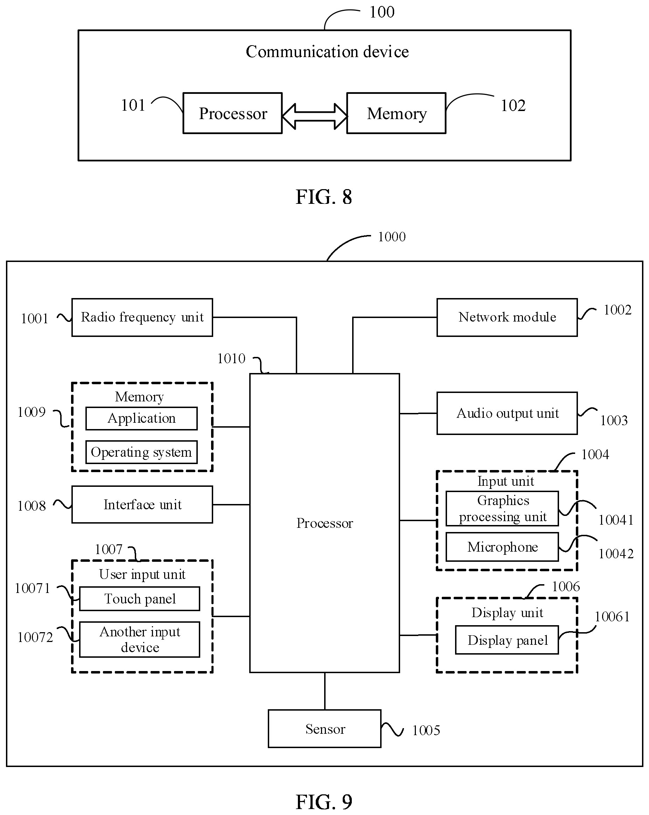

As shown in FIG. 8, an embodiment of this application further provides a communication device 100, including a processor 101 and a memory 102. The memory 102 stores a program or instructions capable of running on the processor 101. For example, when the communication device 100 is a terminal, the program or the instructions are executed by the processor 101 to implement the steps in the foregoing terminal side method embodiment, and same technical effects can be achieved. If the communication device 100 is a network side device, the program or the instructions are executed by the processor 101 to implement the steps in the network side device method embodiment, and same technical effects can be achieved. To avoid repetition, details are not described herein again.

An embodiment of this application further provides a terminal, including a processor and a communication interface. The communication interface is coupled to the processor. The processor is configured to run a program or instructions to implement the steps in the foregoing terminal side method embodiment. The communication interface is configured to receive a PBCH payload sent by a network side device. The processor is configured to execute a behavior corresponding to the PBCH payload based on the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload. The terminal embodiment corresponds to the foregoing terminal side method embodiment. Each implementation process and implementation of the foregoing method embodiment may be applied to the terminal embodiment, and same technical effects can be achieved. Specifically, FIG. 9 is a schematic diagram of a hardware structure of a terminal for implementing an embodiment of this application.

The terminal 1000 includes but is not limited to at least some components in a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) that supplies power to each component. The power supply may be logically connected to the processor 1010 by using a power management system, so as to implement functions such as charging management, discharging management, and power consumption management by using the power management system. The structure of the terminal shown in FIG. 9 does not constitute a limitation on the terminal. The terminal may include more or fewer components than those shown in the figure, or combine some components, or have different component arrangements. Details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a still picture or a video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 1001 may transmit the downlink data to the processor 1010 for processing. In addition, the radio frequency unit 1001 may send uplink data to the network side device. Generally, the radio frequency unit 1001 includes but is not limited to an antenna, an amplifier, a transceiver, a coupler, a low-noise amplifier, a duplexer, and the like.

The memory 1009 may be configured to store a software program or instructions and various types of data. The memory 1009 may mainly include a first storage area for storing a program or instructions and a second storage area for storing data. The first storage area may store an operating system, an application or instructions required by at least one function (for example, a sound playback function or an image playback function), and the like. In addition, the memory 1009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes but is not limited to these memories and any other suitable type of memory.

The processor 1010 may include one or more processing units. Optionally, the processor 1010 integrates an

application processor and a modem processor. The application processor mainly processes operations related to an operating system, a user interface, an application program, and the like. The modem processor, for example, a baseband processor, mainly processes a wireless communication signal. It may be understood that the foregoing modem processor may not be integrated into the processor 1010.

The radio frequency unit 1001 may be configured to receive a PBCH payload sent by a network side device. The processor 1010 may be configured to execute a behavior corresponding to the PBCH payload based on the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

In a possible implementation, the PBCH payload may further include at least one of the following: RAN-related information; antenna polarization type information; antenna polarization direction information; satellite information in an NTN; NTN payload mode information; transmission resource information in a cell; first indication information, where the first indication information is used to indicate whether a BWP is a separate initial BWP; second indication information, where the second indication information is used to indicate a control channel resource type; reference signal information associated with the PBCH payload; a system message associated with the PBCH payload; third indication information, where the third indication information is used to indicate a duplex mode; cyclic prefix type information; fourth indication information, where the fourth indication information is used to indicate a cycle or a cycle type of the first module; jump information, where the jump information is used to indicate a first object to jump to, and the first object includes any one of the following: a cell, the first module, a time domain in which the first module is located, or a frequency domain resource on which the first module is located; cell size information; and length information of an MIB in the PBCH payload. The first module is configured to send at least one of a synchronization signal or a PBCH.

In a possible implementation, the RAN-related information may include at least one of the following: RAN type information, RAN tracking area information, and RAN tracking area update indication information.

In a possible implementation, the transmission resource information may include at least one of the following: band information, BWP information, and carrier information.

In a possible implementation, the frame information related to all the SFNs may include at least one of the following: all the SFNs; and all the SFNs and all hyper frame numbers HFNs.

In a possible implementation, a quantity of bits of all the SFNs may be greater than or equal to a first quantity of bits.

In a possible implementation, the cell access restriction information is used to restrict access for different types of terminals. The cell access restriction information may be determined based on at least one of the following: different terminal types; different cell services; different network slices; a specific PRACH resource set; a specific feature combination; different cell frequency domain resources; different cell time domain resources; different terminal access priorities; a measurement result of the terminal for a downlink signal; whether the terminal supports network energy saving; a minimum bandwidth supported by the terminal; a maximum bandwidth supported by the terminal; and a duplex mode supported by the terminal.

In a possible implementation, the cell frequency domain resource may include any one of the following: a band, a frequency domain range, and a band combination.

In a possible implementation, the cell time domain resource may include any one of the following: a time domain location and a time domain range.

In a possible implementation, the cell access restriction information is used to restrict access only for a specific object, the PBCH payload is a PBCH payload in the first module, and the first module is configured to send at least one of a synchronization signal and a PBCH. The specific object may include any one of the following: a specific beam, a specific signal, and a specific first module. The cell access restriction information may satisfy at least one of the following: cell access restriction information in different first modules is different; cell access restriction information in different types of first modules is different in a case that a same cell supports the different types of first modules; and the cell access restriction information is cell access restriction information in a specific type of first module.

In a possible implementation, the cell access restriction information is used to restrict selection for an intra-frequency cell or an inter-frequency cell. The cell access restriction information may be used to indicate any one of the following: the terminal shall not reselect another cell in a first frequency group the same as a frequency group in which an access barred cell is located, and excludes a cell in the first frequency group as a candidate cell for cell selection or reselection in first duration; and the terminal shall not reselect another cell in a small cell group associated with a first cell, and excludes a cell in the small cell group as a candidate cell for cell selection or reselection in second duration, and the first cell is a macro cell associated with an access barred cell.

In a possible implementation, the first information may be an MIB including type information of the first module.

In a possible implementation, a field of the MIB may be parsed by the terminal based on a first rule; and the first rule includes any one of the following: when information in the MIB is used for a plurality of types of parsing, the terminal

detects first modules having same or different type information for N consecutive times, and a first module detected at an Nth time has inconsistent parsing of a first field in the MIB, the terminal ignores parsing of the first field by the first module detected at the Nth time; and when the terminal detects that all the first modules having same or different type information for N consecutive times indicate first content, the terminal ignores the first content. N is an integer greater than or equal to 2, and the first content includes any one of the following: information that cannot be used for access, information restricting access, access information being not carried, or another access location.

In a possible implementation, there may be at least two pieces of type information of the first module. A quasi co-location QCL relationship between any two first modules may be determined based on any one of the following: first modules having same second content are quasi-co-located in terms of a first parameter; and whether first modules having different second content are quasi-co-located in terms of a first parameter is configured or predetermined by a network. The second content includes at least one of the following: a first module index, a first module format, a first module type, a PBCH demodulation reference signal index, and a slot index, and the first parameter includes at least one of the following: Doppler spread, Doppler frequency shift, an average gain, an average delay, delay spread, and a spatial reception parameter.

In a possible implementation, the type information of the PBCH payload may include any one of the following: common information of a plurality of first module types; and different information of the plurality of first module types. The first module is configured to send at least one of a synchronization signal or a PBCH.

In a possible implementation, the common information of the plurality of first module types is determined at a specific location of the PBCH payload.

In a possible implementation, the bit information of the PBCH payload may be determined based on a display indication in the PBCH payload, or may be predetermined.

In a possible implementation, different types of PBCH payloads have different quantities of valid bits; and the PBCH payload may include a first bit, and the first bit includes at least one of a padding bit and a reserved bit. The first bit is used for at least one of the following: making the different types of PBCH payloads have a same size; and bit alignment.

In a possible implementation, the first module supports different cyclic prefix types; and the cyclic prefix type supported by the first module is determined based on any one of the following: a band on which the first module is transmitted; and blind detection of the terminal.

In the terminal provided in this embodiment of this application, the PBCH payload received by the terminal and sent by the network side device may include at least one of frame information related to all SFNs, cell access restriction information, first information, type information of the PBCH payload, and bit information of the PBCH payload. Therefore, the terminal may execute different corresponding behaviors based on different information included in the PBCH payload, thereby improving flexibility of executing, by the terminal, the behavior corresponding to the PBCH payload.

It may be understood that for implementation processes of the implementations mentioned in this embodiment, refer to related descriptions in the foregoing terminal side method embodiment, and same or corresponding technical effects are achieved. To avoid repetition, details are not described herein again.

An embodiment of this application further provides a network side device, including a processor and a communication interface. The communication interface is coupled to the processor. The processor is configured to run a program or instructions to implement the steps in the foregoing network side device method embodiment. The communication interface is configured to send a PBCH payload to a terminal. The PBCH payload is used by the terminal to execute a behavior corresponding to the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload. The network side device embodiment corresponds to the foregoing network side device method embodiment. Each implementation process and implementation of the foregoing method embodiment may be applied to the embodiment of the network side device, and same technical effects can be achieved.

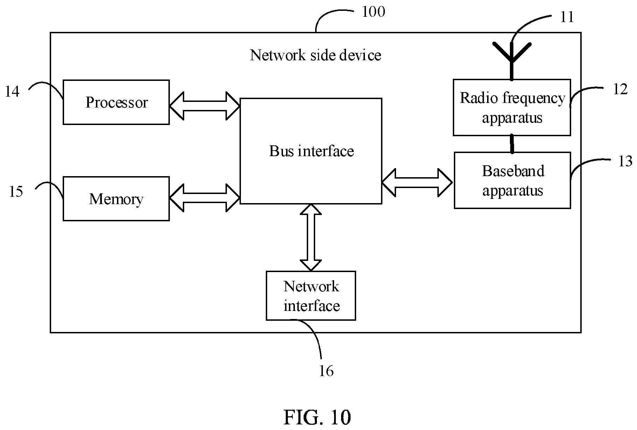

Specifically, an embodiment of this application further provides a network side device. As shown in FIG. 10, a network side device 100 includes an antenna 11, a radio frequency apparatus 12, a baseband apparatus 13, a processor 14, and a memory 15. The antenna 11 is connected to the radio frequency apparatus 12. In an uplink direction, the radio frequency apparatus 12 receives information by using the antenna 11, and sends the received information to the baseband apparatus 13 for processing. In a downlink direction, the baseband apparatus 13 processes to-be-sent information, and sends the processed information to the radio frequency apparatus 12. After processing the received information, the radio frequency apparatus 12 sends the processed information by using the antenna 11.

The method performed by a network side device in the foregoing embodiment may be implemented in the baseband apparatus 13. The baseband apparatus 13 includes a baseband processor.

For example, the baseband apparatus 13 may include at least one baseband board. A plurality of chips are disposed on the baseband board. As shown in FIG. 10, one of the chips is, for example, the baseband processor, and is connected to the memory 15 by using a bus interface, to invoke a program in the memory 15 to perform an operation of a

network device shown in the foregoing method embodiment.

The network side device may further include a network interface 16, and the interface is, for example, a common public radio interface (Common Public Radio Interface, CPRI).

Specifically, the network side device 100 in this embodiment of this application further includes instructions or a program stored in the memory 15 and capable of running on the processor 14. The processor 14 invokes the instructions or the program in the memory 15 to perform the method performed by the modules shown in FIG. 7, and same technical effects are achieved. To avoid repetition, details are not described herein again.

The radio frequency apparatus 12 may be configured to send a PBCH payload to a terminal. The PBCH payload is used by the terminal to execute a behavior corresponding to the PBCH payload. The PBCH payload includes at least one of the following: frame information related to all SFNs; cell access restriction information; first information, where the first information is used to determine a type of a first module corresponding to the PBCH payload, and the first module is configured to send at least one of a synchronization signal or a PBCH; type information of the PBCH payload; and bit information of the PBCH payload.

In a possible implementation, the PBCH payload may further include at least one of the following: RAN-related information; antenna polarization type information; antenna polarization direction information; satellite information in an NTN; NTN payload mode information; transmission resource information in a cell; first indication information, where the first indication information is used to indicate whether a BWP is a separate initial BWP; second indication information, where the second indication information is used to indicate a control channel resource type; reference signal information associated with the PBCH payload; a system message associated with the PBCH payload; third indication information, where the third indication information is used to indicate a duplex mode; cyclic prefix type information; fourth indication information, where the fourth indication information is used to indicate a cycle or a cycle type of the first module; jump information, where the jump information is used to indicate a first object to jump to, and the first object includes any one of the following: a cell, the first module, a time domain in which the first module is located, or a frequency domain resource on which the first module is located; cell size information; and length information of an MIB in the PBCH payload. The first module is configured to send at least one of a synchronization signal or a PBCH.

In a possible implementation, the RAN-related information may include at least one of the following: RAN type information, RAN tracking area information, and RAN tracking area update indication information.

In a possible implementation, the transmission resource information may include at least one of the following: band information, BWP information, and carrier information.

In a possible implementation, the frame information related to all the SFNs may include at least one of the following: all the SFNs; and all the SFNs and all hyper frame numbers HFNs.

In a possible implementation, a quantity of bits of all the SFNs may be greater than or equal to a first quantity of bits.

In a possible implementation, the cell access restriction information is used to restrict access for different types of terminals. The cell access restriction information may be determined based on at least one of the following: different terminal types; different cell services; different network slices; a specific PRACH resource set; a specific feature combination; different cell frequency domain resources; different cell time domain resources; different terminal access priorities; a measurement result of the terminal for a downlink signal; whether the terminal supports network energy saving; a minimum bandwidth supported by the terminal; a maximum bandwidth supported by the terminal; and a duplex mode supported by the terminal.

In a possible implementation, the cell frequency domain resource may include any one of the following: a band, a frequency domain range, and a band combination.

In a possible implementation, the cell time domain resource may include any one of the following: a time domain location and a time domain range.

In a possible implementation, the cell access restriction information is used to restrict access only for a specific object, the PBCH payload is a PBCH payload in the first module, and the first module is configured to send at least one of a synchronization signal and a PBCH. The specific object may include any one of the following: a specific beam, a specific signal, and a specific first module. The cell access restriction information may satisfy at least one of the following: cell access restriction information in different first modules is different; cell access restriction information in different types of first modules is different in a case that a same cell supports the different types of first modules; and the cell access restriction information is cell access restriction information in a specific type of first module.

In a possible implementation, the cell access restriction information is used to restrict selection for an intra-frequency cell or an inter-frequency cell. The cell access restriction information may be used to indicate any one of the following: the terminal shall not reselect another cell in a first frequency group the same as a frequency group in which an access barred cell is located, and excludes a cell in the first frequency group as a candidate cell for cell selection or reselection in first duration; and the terminal shall not reselect another cell in a small cell group associated with a first cell, and excludes a cell in the small cell group as a candidate cell for cell selection or reselection in second duration, and the first cell is a macro cell associated with an access barred cell.

In a possible implementation, the first information may be an MIB including type information of the first module.

In a possible implementation, a field of the MIB may be parsed by the terminal based on a first rule; and the first rule includes any one of the following: when information in the MIB is used for a plurality of types of parsing, the terminal detects first modules having same or different type information for N consecutive times, and a first module detected at an Nth time has inconsistent parsing of a first field in the MIB, the terminal ignores parsing of the first field by the first module detected at the Nth time; and when the terminal detects that all the first modules having same or different type information for N consecutive times indicate first content, the terminal ignores the first content. N is an integer greater than or equal to 2, and the first content includes any one of the following: information that cannot be used for access, information restricting access, access information being not carried, or another access location.

In a possible implementation, there may be at least two pieces of type information of the first module. A quasi co-location QCL relationship between any two first modules may be determined based on any one of the following: first modules having same second content are quasi-co-located in terms of a first parameter; and whether first modules having different second content are quasi-co-located in terms of a first parameter is configured or predetermined by a network. The second content includes at least one of the following: a first module index, a first module format, a first module type, a PBCH demodulation reference signal index, and a slot index, and the first parameter includes at least one of the following: Doppler spread, Doppler frequency shift, an average gain, an average delay, delay spread, and a spatial reception parameter.

In a possible implementation, the type information of the PBCH payload may include any one of the following: common information of a plurality of first module types; and different information of the plurality of first module types. The first module is configured to send at least one of a synchronization signal or a PBCH.

In a possible implementation, the common information of the plurality of first module types is determined at a specific location of the PBCH payload.

In a possible implementation, the bit information of the PBCH payload may be determined based on a display indication in the PBCH payload, or may be predetermined.

In a possible implementation, different types of PBCH payloads have different quantities of valid bits; and the PBCH payload may include a first bit, and the first bit includes at least one of a padding bit and a reserved bit. The first bit is used for at least one of the following: making the different types of PBCH payloads have a same size; and bit alignment.

In a possible implementation, the first module supports different cyclic prefix types; and the cyclic prefix type supported by the first module is determined based on any one of the following: a band on which the first module is transmitted; and blind detection of the terminal.

In the network side device provided in this embodiment of this application, the network side device may send, to the terminal, the PBCH payload including at least one of frame information related to all SFNs, cell access restriction information, first information, type information of the PBCH payload, and bit information of the PBCH payload, so that the terminal executes the behavior corresponding to the PBCH payload. Therefore, the terminal executes different corresponding behaviors based on different information included in the PBCH payload, thereby improving flexibility of executing, by the terminal, the behavior corresponding to the PBCH payload.

It may be understood that for implementation processes of the implementations mentioned in this embodiment, refer to related descriptions in the network side device method embodiment, and same or corresponding technical effects are achieved. To avoid repetition, details are not described herein again.

An embodiment of this application further provides a readable storage medium. The readable storage medium stores a program or instructions. The program or the instructions are executed by a processor to implement the processes in the foregoing behavior execution method embodiment, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface, the communication interface is coupled to the processor, the processor is configured to run a program or instructions to implement the processes in the foregoing behavior execution method embodiment, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing behavior execution method embodiment, and same technical effects can be achieved. To avoid repetition, details are not described herein again.

An embodiment of this application further provides a communication system, including a terminal and a network

side device. The terminal may be configured to perform the steps of the foregoing terminal side method, and the network side device may be configured to perform the steps of the foregoing network side device method.

It should be noted that in this specification, the term "include", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the methods and apparatuses in the implementations of this application is not limited to performing functions in a sequence shown or discussed, and may further include performing functions in a basically simultaneous manner or in a reverse sequence based on related functions. For example, the described methods may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network side device to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

**1.** A behavior execution method, wherein the method comprises:

receiving, by a terminal, a physical broadcast channel PBCH payload sent by a network side device; and
executing, by the terminal, a behavior corresponding to the PBCH payload based on the PBCH payload, wherein the PBCH payload comprises at least one of the following:

frame information related to all system frame numbers SFNs;
cell access restriction information;
first information, wherein the first information is used to determine a type of a first module corresponding to the PBCH payload, and the first module is configured to send at least one of a synchronization signal and a PBCH;
type information of the PBCH payload; and
bit information of the PBCH payload.

**2.** The method according to claim 1, wherein the PBCH payload further comprises at least one of the following:

radio access network RAN-related information;
antenna polarization type information;
antenna polarization direction information;
satellite information in a non-terrestrial network NTN;
NTN payload mode information;
transmission resource information in a cell;
first indication information, wherein the first indication information is used to indicate whether a bandwidth part BWP is a separate initial BWP;
second indication information, wherein the second indication information is used to indicate a control channel resource type;
reference signal information associated with the PBCH payload;
a system message associated with the PBCH payload;
third indication information, wherein the third indication information is used to indicate a duplex mode;
cyclic prefix type information;
fourth indication information, wherein the fourth indication information is used to indicate a cycle or a cycle type of

the first module;
jump information, wherein the jump information is used to indicate a first object to jump to, and the first object comprises any one of the following: a cell, the first module, a time domain in which the first module is located, or a frequency domain resource on which the first module is located;
cell size information; and
length information of a master information block MIB in the PBCH payload; and
the first module is configured to send at least one of a synchronization signal or a PBCH.

**3.** The method according to claim 2, wherein the RAN-related information comprises at least one of the following: RAN type information, RAN tracking area information, and RAN tracking area update indication information.

**4.** The method according to claim 2, wherein the transmission resource information comprises at least one of the following: band information, BWP information, and carrier information.

**5.** The method according to any one of claims 1 to 4, wherein the frame information related to all the SFNs comprises at least one of the following:

all the SFNs; and
all the SFNs and all hyper frame numbers HFNs.

**6.** The method according to claim 1, wherein a quantity of bits of all the SFNs is greater than or equal to a first quantity of bits.

**7.** The method according to any one of claims 1 to 4, wherein the cell access restriction information is used to restrict access for different types of terminals; and
the cell access restriction information is determined based on at least one of the following:

different terminal types;
different cell services;
different network slices;
a specific physical random access channel PRACH resource set;
a specific feature combination;
different cell frequency domain resources;
different cell time domain resources;
different terminal access priorities;
a measurement result of the terminal for a downlink signal;
whether the terminal supports network energy saving;
a minimum bandwidth supported by the terminal;
a maximum bandwidth supported by the terminal; and
a duplex mode supported by the terminal.

**8.** The method according to claim 7, wherein the cell frequency domain resource comprises any one of the following: a band, a frequency domain range, and a band combination.

**9.** The method according to claim 7, wherein the cell time domain resource comprises any one of the following: a time domain location and a time domain range.

**10.** The method according to any one of claims 1 to 4, wherein the cell access restriction information is used to restrict access only for a specific object, the PBCH payload is a PBCH payload in the first module, and the first module is configured to send at least one of a synchronization signal and a PBCH;

the specific object comprises any one of the following: a specific beam, a specific signal, and a specific first module; and
the cell access restriction information satisfies at least one of the following:

cell access restriction information in different first modules is different;
cell access restriction information in different types of first modules is different in a case that a same cell supports the different types of first modules; and

the cell access restriction information is cell access restriction information in a specific type of first module.

**11.** The method according to any one of claims 1 to 4, wherein the cell access restriction information is used to restrict selection for an intra-frequency cell or an inter-frequency cell; and
the cell access restriction information is used to indicate any one of the following:

the terminal shall not reselect another cell in a first frequency group the same as a frequency group in which an access barred cell is located, and excludes a cell in the first frequency group as a candidate cell for cell selection or reselection in first duration; and
the terminal shall not reselect another cell in a small cell group associated with a first cell, and excludes a cell in the small cell group as a candidate cell for cell selection or reselection in second duration, and the first cell is a macro cell associated with an access barred cell.

**12.** The method according to any one of claims 1 to 4, wherein the first information is an MIB comprising type information of the first module.

**13.** The method according to claim 12, wherein a field of the MIB may be parsed by the terminal based on a first rule; the first rule comprises any one of the following:

when information in the MIB is used for a plurality of types of parsing, the terminal detects first modules having same or different type information for N consecutive times, and a first module detected at an Nth time has inconsistent parsing of a first field in the MIB, the terminal ignores parsing of the first field by the first module detected at the Nth time; and
when the terminal detects that all the first modules having same or different type information for N consecutive times indicate first content, the terminal ignores the first content; and
N is an integer greater than or equal to 2, and the first content comprises any one of the following: information that cannot be used for access, information restricting access, access information being not carried, or another access location.

**14.** The method according to claim 12, wherein a number of pieces of type information of the first module is at least two; a quasi co-location QCL relationship between any two first modules is determined based on any one of the following:

first modules having same second content are quasi-co-located in terms of a first parameter; and
whether first modules having different second content are quasi-co-located in terms of a first parameter is configured or predetermined by a network; and
the second content comprises at least one of the following: a first module index, a first module format, a first module type, a PBCH demodulation reference signal index, and a slot index, and the first parameter comprises at least one of the following: Doppler spread, Doppler frequency shift, an average gain, an average delay, delay spread, and a spatial reception parameter.

**15.** The method according to any one of claims 1 to 4, wherein the type information of the PBCH payload comprises any one of the following:

common information of a plurality of first module types; and
different information of the plurality of first module types; and
the first module is configured to send at least one of a synchronization signal or a PBCH.

**16.** The method according to claim 15, wherein the common information of the plurality of first module types is determined at a specific location of the PBCH payload.

**17.** The method according to any one of claims 1 to 4, wherein the bit information of the PBCH payload is determined based on a display indication in the PBCH payload, or is predetermined.

**18.** The method according to any one of claims 1 to 4, wherein different types of PBCH payloads have different quantities of valid bits;

the PBCH payload comprises a first bit, and the first bit comprises at least one of a padding bit and a reserved bit; and

the first bit is used for at least one of the following:

making the different types of PBCH payloads have a same size; and
byte alignment.

**19.** The method according to claim 1, wherein the first module supports different cyclic prefix types; and the cyclic prefix type supported by the first module is determined based on any one of the following: a band on which the first module is transmitted; and blind detection of the terminal.

**20.** A behavior execution method, wherein the method comprises:

sending, by a network side device, a PBCH payload to a terminal, wherein
the PBCH payload is used by the terminal to execute a behavior corresponding to the PBCH payload; and
the PBCH payload comprises at least one of the following:

frame information related to all SFNs;
cell access restriction information;
first information, wherein the first information is used to determine a type of a first module corresponding to the PBCH payload, and the first module is configured to send at least one of a synchronization signal and a PBCH;
type information of the PBCH payload; and
bit information of the PBCH payload.

**21.** The method according to claim 20, wherein the PBCH payload may further comprise at least one of the following:

RAN-related information;
antenna polarization type information;
antenna polarization direction information;
satellite information in an NTN;
NTN payload mode information;
transmission resource information in a cell;
first indication information, wherein the first indication information is used to indicate whether a BWP is a separate initial BWP;
second indication information, wherein the second indication information is used to indicate a control channel resource type;
reference signal information associated with the PBCH payload;
a system message associated with the PBCH payload;
third indication information, wherein the third indication information is used to indicate a duplex mode;
cyclic prefix type information;
fourth indication information, wherein the fourth indication information is used to indicate a cycle or a cycle type of the first module;
jump information, wherein the jump information is used to indicate a first object to jump to, and the first object comprises any one of the following: a cell, the first module, a time domain in which the first module is located, or a frequency domain resource on which the first module is located;
cell size information; and
length information of a master information block MIB in the PBCH payload; and
the first module is configured to send at least one of a synchronization signal or a PBCH.

**22.** The method according to claim 20 or 21, wherein the frame information related to all the SFNs comprises at least one of the following:

all the SFNs; and
all the SFNs and all hyper frame numbers HFNs.

**23.** The method according to claim 20, wherein a quantity of bits of all the SFNs is greater than or equal to a first quantity of bits.

**24.** The method according to claim 20 or 21, wherein the cell access restriction information is used to restrict access for

different types of terminals; and
the cell access restriction information is determined based on at least one of the following:

different terminal types;
different cell services;
different network slices;
a specific PRACH resource set;
a specific feature combination;
different cell frequency domain resources;
different cell time domain resources;
different terminal access priorities;
a measurement result of the terminal for a downlink signal;
whether the terminal supports network energy saving;
a minimum bandwidth supported by the terminal;
a maximum bandwidth supported by the terminal; and
a duplex mode supported by the terminal.

**25.** The method according to claim 20 or 21, wherein the cell access restriction information is used to restrict access only for a specific object, the PBCH payload is a PBCH payload in the first module, and the first module is configured to send at least one of a synchronization signal and a PBCH;

the specific object comprises any one of the following: a specific beam, a specific signal, and a specific first module; and
the cell access restriction information satisfies at least one of the following:

cell access restriction information in different first modules is different;
cell access restriction information in different types of first modules is different in a case that a same cell supports the different types of first modules; and
the cell access restriction information is cell access restriction information in a specific type of first module.

**26.** The method according to claim 20 or 21, wherein the cell access restriction information is used to restrict selection for an intra-frequency cell or an inter-frequency cell; and
the cell access restriction information is used to indicate any one of the following:

the terminal shall not reselect another cell in a first frequency group the same as a frequency group in which an access barred cell is located, and excludes a cell in the first frequency group as a candidate cell for cell selection or reselection in first duration; and
the terminal shall not reselect another cell in a small cell group associated with a first cell, and excludes a cell in the small cell group as a candidate cell for cell selection or reselection in second duration, and the first cell is a macro cell associated with an access barred cell.

**27.** The method according to claim 20 or 21, wherein the first information is an MIB comprising type information of the first module.

**28.** The method according to claim 20 or 21, wherein the type information of the PBCH payload comprises any one of the following:

common information of a plurality of first module types; and
different information of the plurality of first module types; and
the first module is configured to send at least one of a synchronization signal or a PBCH.

**29.** The method according to claim 20 or 21, wherein the bit information of the PBCH payload is determined based on a display indication in the PBCH payload, or is predetermined.

**30.** The method according to claim 20 or 21, wherein different types of PBCH payloads have different quantities of valid bits;

the PBCH payload comprises a first bit, and the first bit comprises at least one of a padding bit and a reserved bit;

and
the first bit is used for at least one of the following:

making the different types of PBCH payloads have a same size; and
byte alignment.

**31.** The method according to claim 20, wherein the first module supports different cyclic prefix types; and the cyclic prefix type supported by the first module is determined based on any one of the following: a band on which the first module is transmitted; and blind detection of the terminal.

**32.** A behavior execution apparatus, wherein the apparatus comprises a receiving module and an execution module;

the receiving module is configured to receive a PBCH payload sent by a network side device; and
the execution module is configured to execute a behavior corresponding to the PBCH payload based on the PBCH payload, wherein
the PBCH payload comprises at least one of the following:

frame information related to all SFNs;
cell access restriction information;
first information, wherein the first information is used to determine a type of a first module corresponding to the PBCH payload, and the first module is configured to send at least one of a synchronization signal and a PBCH;
type information of the PBCH payload; and
bit information of the PBCH payload.

**33.** A behavior execution apparatus, wherein the apparatus comprises a sending module; and the sending module is configured to send a PBCH payload to a terminal, wherein

the PBCH payload is used by the terminal to execute a behavior corresponding to the PBCH payload; and
the PBCH payload comprises at least one of the following:

frame information related to all SFNs;
cell access restriction information;
first information, wherein the first information is used to determine a type of a first module corresponding to the PBCH payload, and the first module is configured to send at least one of a synchronization signal and a PBCH;
type information of the PBCH payload; and
bit information of the PBCH payload.

**34.** A terminal, comprising a processor and a memory, wherein the memory stores a program or instructions capable of running on the processor, and the program or the instructions are executed by the processor to implement the steps of the behavior execution method according to any one of claims 1 to 19.

**35.** A network side device, comprising a processor and a memory, wherein the memory stores a program or instructions capable of running on the processor, and the program or the instructions are executed by the processor to implement the steps of the behavior execution method according to any one of claims 20 to 31.

**36.** A readable storage medium, wherein the readable storage medium stores a program or instructions, and the program or instructions are executed by a processor to implement the behavior execution method according to any one of claims 1 to 19, or implement the steps of the behavior execution method according to any one of claims 20 to 31.

12
Network
side device
11
11
Terminal
Terminal

FIG. 1

| | PSS | |
|---|---|---|
| PBCH | | |
| PBCH | SSS | PBCH |
| PBCH | | |

| Subcarrier spacing | Slot n | Slot n+1 |
|---|---|---|
| 15 kHz | 0 1 2 3 4 5 6 7 8 9 10 11 12 13 | 0 1 2 3 4 5 6 7 8 9 10 11 12 13 |
| 30 kHz (mode 1) | 0 1 2 3 4 5 6 7 8 9 10 11 12 13 | 0 1 2 3 4 5 6 7 8 9 10 11 12 13 |
| 30 kHz (mode 2) | 0 1 2 3 4 5 6 7 8 9 10 11 12 13 | 0 1 2 3 4 5 6 7 8 9 10 11 12 13 |
| 120 kHz | 0 1 2 3 4 5 6 7 8 9 10 11 12 13 | 0 1 2 3 4 5 6 7 8 9 10 11 12 13 |

| | Slot n | Slot n+1 | Slot n+2 | Slot n+3 |
|---|---|---|---|---|
| 240 kHz | 0 1 2 3 4 5 6 7 8 9 10 11 12 13 | 0 1 2 3 4 5 6 7 8 9 10 11 12 13 | 0 1 2 3 4 5 6 7 8 9 10 11 12 13 | 0 1 2 3 4 5 6 7 8 9 10 11 12 13 |

FIG. 2

RO
Frequency
RO# 7
RO# 6
RO# 5
RO# 4
RO# 3
RO# 2
RO# 1
RO# 0
Associated SSB#3
Associated SSB#2
Associated SSB#1
Associated SSB#0
Time

FIG. 3

Frequency
SSB#2/3 RO#1
SSB#0/1 RO#0
SSB#6/7 RO#3
SSB#4/5 RO#2
SSB#2/3 RO#5
SSB#0/1 RO#4
SSB#6/7 RO#7
SSB#4/5 RO#6
Time

FIG. 4

Network side device
Terminal
501: Send a PBCH payload to the terminal
502: Receive the PBCH payload sent by the network side device
503: Execute a behavior corresponding to the PBCH payload based on the PBCH payload

FIG. 5

60
Behavior execution apparatus
Receiving module
61
Execution module
62

FIG. 6

70
Behavior execution apparatus
Sending module
71

FIG. 7

100
Communication device
101
Processor
Memory
102

FIG. 8

1000
1001
Radio frequency unit
Network module
1002
1010
1009
Memory
Application
Operating system
Audio output unit
1003
1004
Input unit
Graphics processing unit
10041
Microphone
10042
1008
Interface unit
Processor
1007
User input unit
10071
Touch panel
10072
Another input device
1006
Display unit
10061
Display panel
Sensor
1005

FIG. 9

100
11
Network side device
14
Processor
Radio frequency apparatus
12
Bus interface
13
Baseband apparatus
15
Memory
Network interface
16

FIG. 10

**INTERNATIONAL SEARCH REPORT**

International application No.
**PCT/CN2024/124785**

**A. CLASSIFICATION OF SUBJECT MATTER**

H04W 48/08(2009.01)i

According to International Patent Classification (IPC) or to both national classification and IPC

**B. FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, WPABSC, 3GPP: 有效载荷, 载荷, 类型, 比特, 极化, 参考信号, 周期, 资源, MIB, NTN, SFN, PBCH, payload, load, type, bit, polarization, reference signal, period, resource

**C. DOCUMENTS CONSIDERED TO BE RELEVANT**

| Category* | Citation of document, with indication, where appropriate, of the relevant passages | Relevant to claim No. |
|---|---|---|
| X | CN 109588062 A (LG ELECTRONICS INC.) 05 April 2019 (2019-04-05)<br>description, paragraphs 106 and 355, and claims 1-13 | 1, 20, 32-35 |
| A | CN 108353318 A (BEIJING XIAOMI MOBILE SOFTWARE CO., LTD.) 31 July 2018 (2018-07-31)<br>entire document | 1-36 |
| A | CN 112822774 A (DATANG MOBILE COMMUNICATIONS EQUIPMENT CO., LTD.) 18 May 2021 (2021-05-18)<br>entire document | 1-36 |
| A | CN 113271192 A (DATANG MOBILE COMMUNICATIONS EQUIPMENT CO., LTD.) 17 August 2021 (2021-08-17)<br>entire document | 1-36 |
| A | CN 113711552 A (NTT DOCOMO, INC.) 26 November 2021 (2021-11-26)<br>entire document | 1-36 |
| A | CN 116567688 A (VIVO MOBILE COMMUNICATION CO., LTD.) 08 August 2023 (2023-08-08)<br>entire document | 1-36 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 January 2025** | **24 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2024/124785**

**C. DOCUMENTS CONSIDERED TO BE RELEVANT**

| Category* | Citation of document, with indication, where appropriate, of the relevant passages | Relevant to claim No. |
|---|---|---|
| A | WO 2019022577 A1 (LG ELECTRONICS INC.) 31 January 2019 (2019-01-31) entire document | 1-36 |
| A | WO 2021027694 A1 (BEIJING UNISOC COMMUNICATIONS TECHNOLOGY CO., LTD.) 18 February 2021 (2021-02-18) entire document | 1-36 |

Form PCT/ISA/210 (second sheet) (July 2022)

**INTERNATIONAL SEARCH REPORT**
**Information on patent family members**

International application No.
**PCT/CN2024/124785**

| Patent document cited in search report | | | Publication date (day/month/year) | Patent family member(s) | | | Publication date (day/month/year) |
|---|---|---|---|---|---|---|---|
| CN | 109588062 | A | 05 April 2019 | US | 2023262736 | A1 | 17 August 2023 |
| | | | | US | 11943790 | B2 | 26 March 2024 |
| | | | | US | 2021235418 | A1 | 29 July 2021 |
| | | | | US | 11665712 | B2 | 30 May 2023 |
| | | | | EP | 3474554 | A1 | 24 April 2019 |
| | | | | EP | 3474554 | A4 | 11 March 2020 |
| | | | | EP | 3474554 | B1 | 07 September 2022 |
| | | | | JP | 2020508000 | A | 12 March 2020 |
| | | | | JP | 6894522 | B2 | 30 June 2021 |
| | | | | WO | 2019022577 | A1 | 31 January 2019 |
| | | | | KR | 20190013622 | A | 11 February 2019 |
| | | | | KR | 101976055 | B1 | 08 May 2019 |
| | | | | US | 2020163052 | A1 | 21 May 2020 |
| | | | | US | 11006387 | B2 | 11 May 2021 |
| CN | 108353318 | A | 31 July 2018 | WO | 2019075690 | A1 | 25 April 2019 |
| | | | | US | 2020228276 | A1 | 16 July 2020 |
| | | | | US | 11223458 | B2 | 11 January 2022 |
| CN | 112822774 | A | 18 May 2021 | None | | | |
| CN | 113271192 | A | 17 August 2021 | None | | | |
| CN | 113711552 | A | 26 November 2021 | None | | | |
| CN | 116567688 | A | 08 August 2023 | None | | | |
| WO | 2019022577 | A1 | 31 January 2019 | None | | | |
| WO | 2021027694 | A1 | 18 February 2021 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311364174